# FASCICULE DE BREVET EUROPEEN

(11) **EP 3 944 984 B1**
(45) Date de publication et mention de la délivrance du brevet: **12.10.2022**
(21) Numéro de dépôt: 21186746.0
(22) Date de dépôt: 20.07.2021
(51) Int. Cl.: B60M 1/26, B60M 1/28

(54) **CROCHET DE LEVAGE**
HUBHAKEN
LIFTING HOOK

(30) Priorité: 31.07.2020 FR 2008147
(43) Date de publication de la demande: 02.02.2022
(73) Titulaire: 4NRJ, 41260 La Chaussée-Saint-Victor (FR)
(72) Inventeur: GASSELIN, Benoît, 41000 Blois (FR); LEGUEL, Anthony, 41190 Herbault (FR)
(74) Mandataire: Lequien, Philippe

(56) Documents cités:
- DE-C1- 10 137 435
- DE-C1- 19 844 410
- FR-A1- 2 867 427
- KR-B1- 101 972 152

## Description

Le domaine de l'invention est celui de la conception et de la fabrication d'équipements de maintenance ferroviaire.

Plus précisément, l'invention concerne un crochet de levage pour la maintenance de caténaires.

Une caténaire est un ensemble composé d'un câble porteur et d'un câble conducteur d'énergie électrique.

Pour permettre une alimentation continue d'un appareil ferroviaire, ces câbles ont besoin d'être parfaitement rectilignes, ou à tout le moins les plus rectilignes possibles.

Les câbles sont tendus par des appareils-tendeurs munis de contrepoids (pouvant atteindre plusieurs tonnes) qui exercent une traction équilibrée sur les câbles et les maintiennent en tension.

La tension mécanique est constante et déterminée pour une plage de température définie.

Lorsque les appareils ferroviaires circulent sur les voies ferrées, l'un au moins de leurs pantographes vient au contact du câble conducteur pour assurer une liaison électrique permettant d'alimenter électriquement l'appareil ferroviaire.

Au fur et à mesure de la circulation des appareils ferroviaires, les pantographes frottent sur caténaires et usent ces dernières, notamment le câble conducteur. Les caténaires doivent donc être inspectées pour s'assurer de l'alimentation électrique des appareils ferroviaires.

Pour cela, les caténaires sont détendues afin de permettre une intervention de techniciens de maintenance.

Les appareils-tendeurs sont alors manipulés pour baisser la tension mécanique de maintien des caténaires.

Plus précisément, chaque appareil-tendeur comprend une chape formant une interface entre le câble porteur et un contrepoids.

Le contrepoids est classiquement constitué d'au moins un support relié à la chape, et sur lequel sont montés des poids.

Lors de la phase de maintenance des caténaires, les techniciens de maintenance soulèvent alors les poids pour détendre le câble porteur.

Cette opération s'avère contraignante et requiert généralement la présence de plusieurs techniciens de maintenance.

Divers crochets de levage existent et sont mis en œuvre pour lever le contrepoids. En pratique, on constate que l'opération de levage s'avère dangereuse, les crochets utilisés n'assurant pas un niveau de sécurité satisfaisant vis-à-vis d'un décrochage intempestif du contrepoids.

Le document KR 101 972 152 B1 décrit un tel crochet de levage.

L'invention a notamment pour objectif de palier les inconvénients de l'art antérieur.

Plus précisément, l'invention a pour objectif de proposer une technique permettant d'effectuer en toute sécurité un levage des contrepoids de mise en tension des caténaires.

L'invention a également pour objectif de fournir une telle technique permettant d'effectuer le levage des contrepoids par un seul technicien de maintenance. L'invention a également pour objectif de fournir une telle technique qui soit facilement manipulable.

L'invention a en outre pour objectif de fournir une telle technique qui soit robuste. Ces objectifs, ainsi que d'autres qui apparaîtront par la suite, sont atteints grâce à l'invention qui a pour objet un crochet de levage pour le levage d'un appareil-tendeur de caténaire, l'appareil-tendeur comprenant :
- une tige sur laquelle sont montés des poids,
- une pièce de raccordement à la caténaire, montée à une extrémité de la tige et s'étendant en saillie radiale de la tige, le crochet de levage comprenant :
- une platine ;
- des moyens de préhension solidaires de la platine et permettant la manipulation du crochet de levage par des moyens de levage ;
la platine présentant :
- un siège de réception de la pièce de raccordement de l'appareil-tendeur ;
- un canal traversant de part en part la platine selon une direction de levage, depuis le siège de réception, et destinée à loger la tige de l'appareil-tendeur, et
- une fente d'accès au canal pour amener la tige dans le canal depuis l'extérieur de la platine, la fente d'accès s'étendant obliquement par rapport à la direction de levage dans un plan transversal à une direction d'insertion de la tige dans le canal.

Un tel crochet permet une manipulation par un seul technicien de maintenance, cela en toute sécurité.

En effet, du fait que la fente s'étende obliquement par rapport à la direction de levage, c'est-à-dire par rapport à la direction d'extension du canal, le technicien de maintenance est obligé de faire pivoter la platine pour insérer la pièce de raccordement dans le canal. Lorsque la pièce de raccordement est dans le canal, le technicien de maintenance peut alors faire de nouveau pivoter la platine, en sens inverse, ce qui provoque la retenue la pièce de raccordement dans le canal. La tige reste alors bloquée dans la platine, ce qui empêche sa sortie de la platine de manière involontaire.

L'utilisateur peut alors utiliser les moyens de levage de sorte à soulever l'appareil-tendeur, sans risque que l'appareil-tendeur ne s'échappe de la platine et en blesse le technicien de maintenance.

Avantageusement, le crochet comprend au moins un aimant orienté vers le canal pour retenir la tige de l'appareil-tendeur dans le canal par attraction magnétique. Grâce à cet aimant, la sécurité du technicien de maintenance est accrue puisque la pièce de raccordement reste au contact de la platine.

De préférence, le crochet comprend deux aimants orientés vers le canal, placés de part et d'autre du canal.

Par un positionnement de part et d'autre du canal, les aimants permettent, en plus de sa retenue sur la platine, de centrer la pièce de raccordement sur le siège, afin que les efforts liés au poids de l'appareil-tendeur soient répartis sur la platine. Selon un mode de réalisation avantageux, la platine présente une face supérieure, le siège de réception formant un épaulement avec la face supérieure. L'épaulement permet de pouvoir maintenir la pièce de raccordement afin que cette dernière ne glisse pas sur la platine, ou alors que ce glissement soit limité et puisse être contrôlé par le technicien de maintenance.

Préférentiellement, l'épaulement présente des dimensions radiales supérieures aux dimensions radiales de la pièce de raccordement pour permettre une rotation de la pièce de raccordement dans l'épaulement.

Les dimensions radiales de l'épaulement assurent également une compatibilité de la platine et du crochet de levage avec des pièces de raccordement de différentes tailles ou formes.

Selon un aspect avantageux, la fente d'accès est pratiquée sur une face avant de la platine, la face avant présentant une forme d'entonnoir pour permettre le guidage de la tige de l'appareil-tendeur dans la fente d'accès.

La forme d'entonnoir permet de faciliter l'insertion de la pièce de raccordement dans la platine pour le technicien de maintenance. En effet, en approchant la platine de la pièce de raccordement, la forme d'entonnoir permet de compenser un défaut d'alignement de la fente d'accès avec la pièce de raccordement par le technicien de maintenance

Avantageusement, les moyens de préhension sont reliés à la platine par l'intermédiaire d'au moins une élingue.

Les élingues permettent la manipulation de la platine par le technicien de maintenance pour pouvoir insérer la pièce de raccordement dans le canal, ou l'en extraire, tout en assurant une tenue mécanique importante pour assurer le levage de l'appareil-tendeur.

De préférence, la ou chaque élingue est montée à rotation sur la platine.

Ce montage permet une manipulation aisée de la platine pour le technicien de maintenance tout en favorisant sa sécurité lors du levage de l'appareil-tendeur. En effet, si l'axe de levage est légèrement incliné par rapport à l'axe de traction exercé par l'appareil-tendeur, le montage à rotation des élingues sur la platine permet de rattraper cette inclinaison lors du levage de l'appareil-tendeur, en évitant que l'appareil-tendeur ne devienne un pendule et représente un risque pour le technicien de maintenance.

L'invention concerne également un dispositif de levage d'un appareil-tendeur de caténaire, comprenant :
- des moyens de levage ;
- un crochet tel que précédemment décrit.

De préférence, le dispositif de levage comprend également un palan intercalé entre des moyens de préhension du crochet, et les moyens de levage.

Le palan permet notamment un levage précis de l'appareil-tendeur, lorsque le débattement souhaité pour la détente de la caténaire est peu important.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue en perspective de dessus d'un crochet de levage selon l'invention en prise avec un dispositif-tendeur ou un appareil-tendeur de caténaire ;
- la figure 2 est une vue de détail, en perspective de dessus, de l'appareil-tendeur en prise avec le crochet de levage selon l'invention ;
- la figure 3 est une vue en perspective de dessus du crochet de levage selon l'invention, préalablement à sa coopération avec l'appareil-tendeur ;
- la figure 4 est une vue de face d'une première étape d'insertion de la tige de l'appareil-tendeur dans le crochet de levage selon l'invention ;
- la figure 5 est une vue en perspective de dessus illustrant le crochet de levage dans lequel est insérée la tige de l'appareil-tendeur ;
- la figure 6 est une vue de dessous illustrant l'insertion de la tige de l'appareil-tendeur dans le crochet de levage selon l'invention ;
- la figure 7 est une vue de face illustrant la tige de l'appareil-tendeur une fois insérée dans le crochet de levage selon l'invention ;
- la figure 8 est une vue de face illustrant le crochet repositionné dans une position de levage préalablement à sa coopération avec un organe de raccordement de l'appareil-tendeur, en vue du levage de l'appareil-tendeur ;
- la figure 9 est une vue de dessus illustrant la coopération entre la pièce de raccordement de l'appareil-tendeur et la platine du crochet de levage selon l'invention ;
- la figure 10 est une vue en coupe illustrant la coopération entre un siège de réception de la platine et la pièce de raccordement de l'appareil-tendeur lors d'une phase de déplacement ou de levage de l'appareil-tendeur ;
- la figure 11 est une vue en perspective d'un dispositif de levage comprenant un crochet de levage selon l'invention.

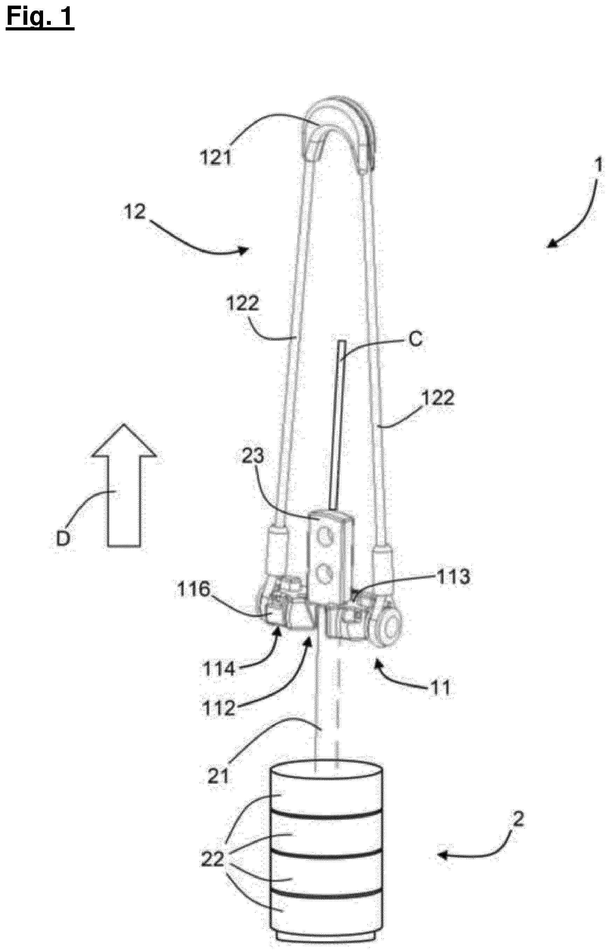

Les figures 1 à 10 décrivent un crochet 1 de levage selon l'invention.

Le crochet 1 de levage est notamment utilisé pour le levage d'un appareil-tendeur 2 d'une caténaire C.

Les caténaires C permettent de pouvoir alimenter des appareils ferroviaires, notamment des locomotives, pour permettre leur fonctionnement et leur déplacement sur les voies ferrées.

Chaque caténaire C comprend généralement au moins un câble de tension de la caténaire C, et un câble électrique permettant le transport d'énergie électrique.

Le câble de tension est tendu pour permettre qu'entre deux pylônes la caténaire C soit tendue et que les pantographes des machines ferroviaires soient en contact permanent ou, à tout le moins, en contact le plus fréquent possible avec la caténaire C.

Toutefois, le frottement des pantographes sur les caténaires C, et notamment sur le câble électrique, provoque sa détérioration. Il est donc nécessaire de pouvoir détendre la caténaire C afin de pouvoir la réparer ou, le cas échéant, la remplacer.

Pour permettre leur tension, les caténaires C sont reliées à un appareil-tendeur 2 qui permet de lester et d'exercer une force de traction sur chacune des extrémités des caténaires C ou, à tout le moins, sur l'une des extrémités des caténaires C.

Un appareil-tendeur 2 comprend classiquement :
- une tige 21 ;
- des poids 22 montés sur la tige 21 ;
- une pièce de raccordement 23 de la tige 21 à la caténaire C.

Plus précisément, la pièce de raccordement 23 est montée à une extrémité de la tige 21 et s'étend en saillie radiale de la tige 21.

La pièce de raccordement 23 de l'appareil-tendeur 2 est avantageusement réalisée dans un matériau ferromagnétique.

De préférence, la pièce de raccordement se présente sous la forme d'un parallélépipède rectangle présentant une surface inférieure 231 plane.

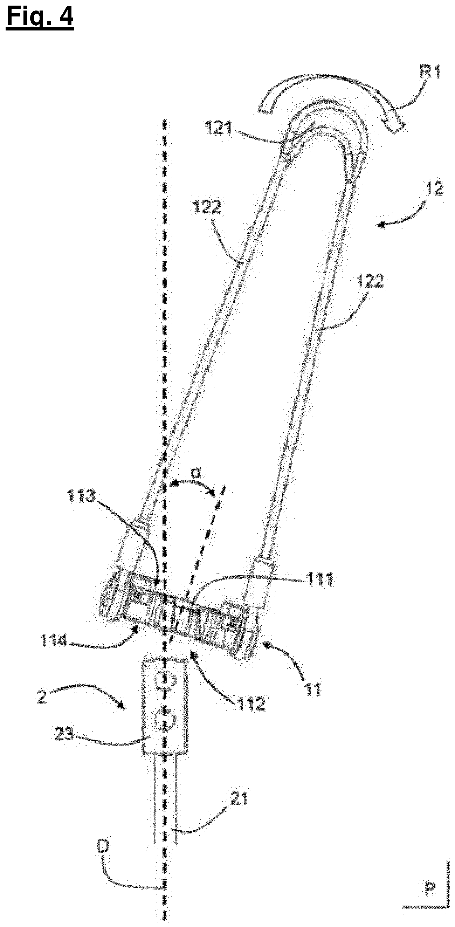

Tel que cela est particulièrement visible sur les figures 4, 8 et 10, la surface inférieure 231 permet, comme expliqué ci-après, de pouvoir saisir la pièce de raccordement 23 pour pouvoir déplacer l'appareil-tendeur 2.

Cette opération de déplacement de l'appareil-tendeur 2 se fait notamment au moyen du crochet 1 de levage selon l'invention.

Le crochet 1 de levage comprend :
- une platine 11 ;
- des moyens de préhension 12 ;
- des moyens de retenue.

En utilisation, la platine 11 coopère avec la pièce de raccordement 23 pour permettre sa manipulation.

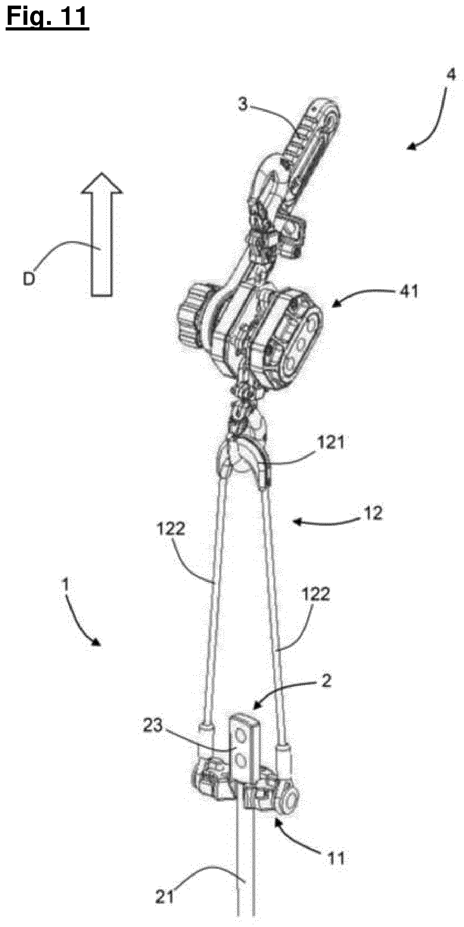

Les moyens de préhension 12 permettent quant à eux la manipulation du crochet 1 de levage par des moyens de levage 3, de sorte à former un dispositif de levage 4, tel qu'illustré sur la figure 11.

Enfin, les moyens de retenue permettent la retenue de l'appareil-tendeur dans le crochet 1 de levage, comme expliqué ci-après.

La platine 11 du crochet 1 de levage est avantageusement réalisée dans un matériau métallique.

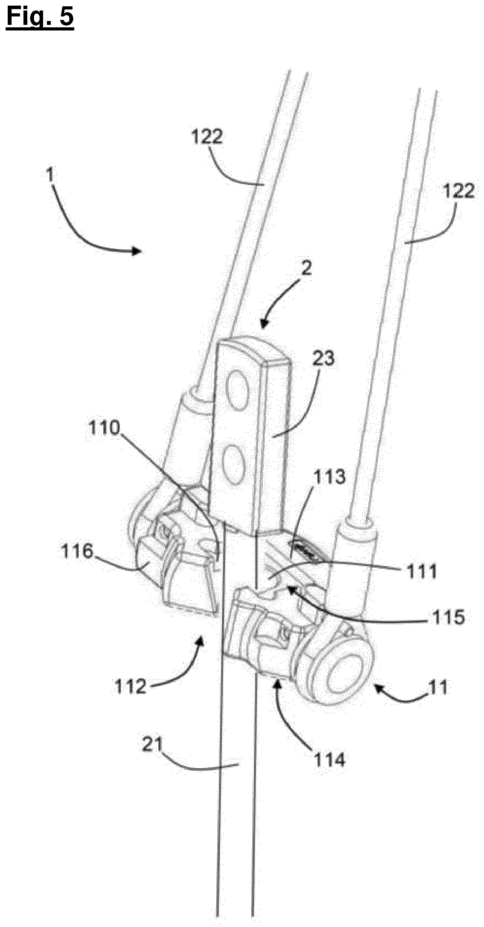

En référence aux figures 1 à 10, et plus particulièrement aux figures 5, 6 et 9, la platine 11 du crochet 1 de levage comprend :
- un siège 110 de réception de la pièce de raccordement 23 de l'appareil-tendeur 2 ;
- un canal 111 traversant de part en part la platine 11, et
- une fente d'accès 112 au canal 111.

Plus particulièrement, le canal 111 traverse de part en part la platine 110 selon une direction de levage D, depuis le siège 110 de réception.

En d'autres termes, le canal 111 s'étend d'une face supérieure 113 à une face inférieure 114 de la platine 11, en débouchant sur chacune de ces faces.

Ce canal 111 est destiné à loger la tige 21 de l'appareil-tendeur tel que cela est notamment illustré sur les figures 5, 9, 10 et 11.

La fente d'accès 112 au canal 11 permet l'insertion de la tige 21 de l'appareil-tendeur 2 dans le canal 111, depuis l'extérieur de la platine 11.

La fente d'accès 112 s'étend obliquement par rapport à la direction de levage D dans un plan transversal à une direction d'insertion I de la tige 21 dans le canal 111.

Plus précisément, en référence à la figure 4, la fente d'accès 112 s'étend selon une direction qui forme un angle α avec la direction de levage D.

Sur la platine 11 en elle-même, le canal 111 s'étendant selon la direction de levage D, en formant l'angle α entre la direction d'extension du canal 111 et la direction d'extension de la fente d'accès 112.

L'angle α est avantageusement compris entre 10° et 45°, bornes inclues.

La fente d'accès 112 est pratiquée sur une face avant 116 de la platine 11.

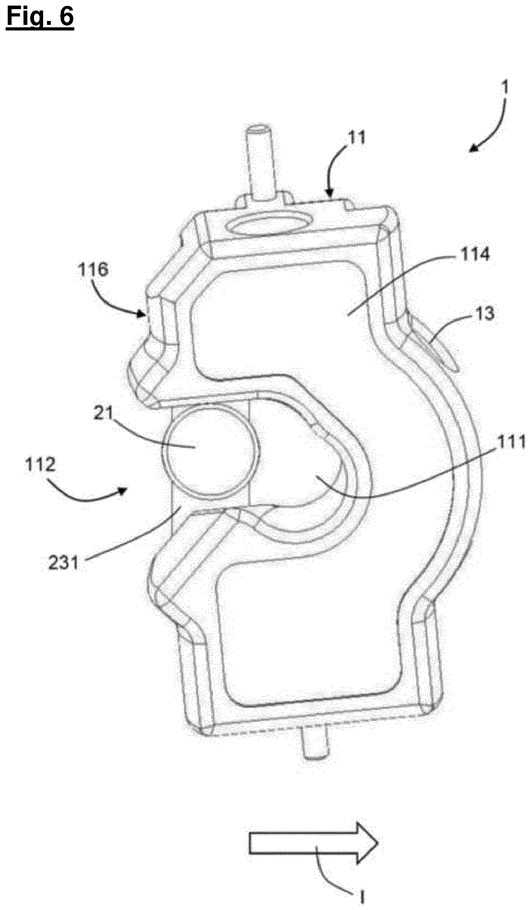

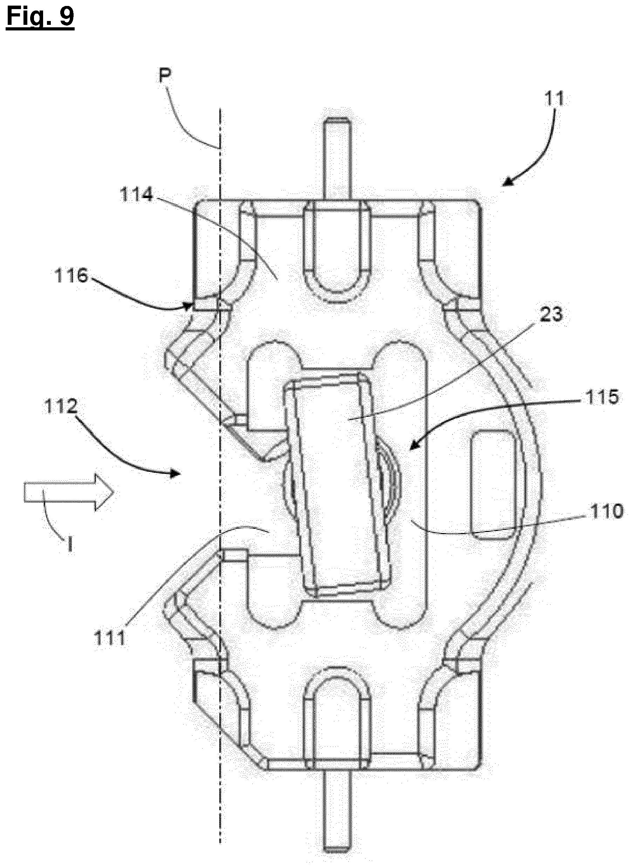

Avantageusement, tel qu'on peut le voir notamment sur les figures 6 et 9, la face avant 116 présente une forme d'entonnoir pour permettre le guidage de la tige 21 de l'appareil-tendeur 2 dans la fente d'accès 112, depuis l'extérieur de la platine 11.

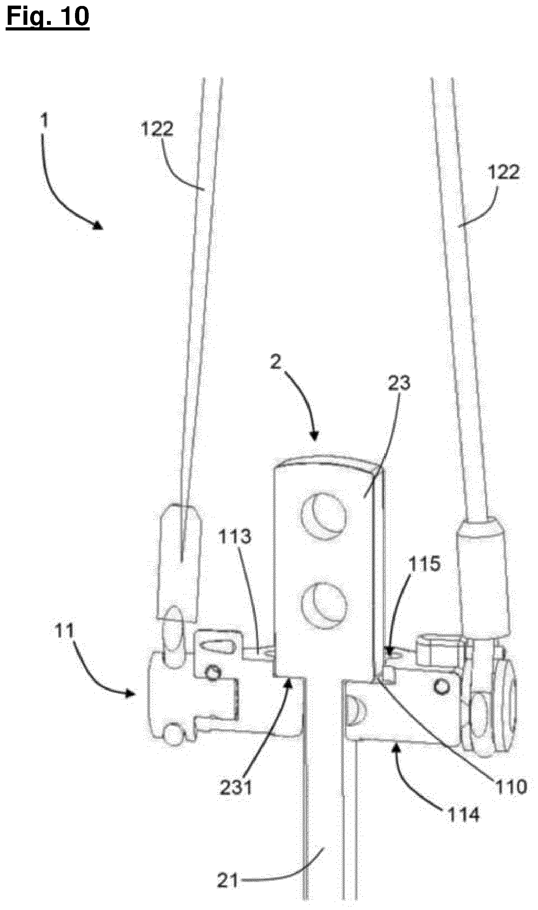

Tel qu'illustré sur la figure 10, la platine 11 présente la face supérieure 113 sur laquelle est réalisé le siège 110 de réception.

Plus particulièrement, le siège 110 de réception forme un épaulement 115 avec la face supérieure 113.

En d'autres termes, le siège 110 de réception est décalé vers l'intérieur de la platine 11 par rapport à la face supérieure 113.

L'épaulement 115 présente avantageusement des dimensions radiales supérieures aux dimensions radiales de la pièce de raccordement 23 pour permettre une rotation de la pièce de raccordement 23 dans l'épaulement 115. Comme expliqué ci-après, cela permet de pouvoir positionner correctement la pièce de raccordement 23 dans le siège 110 de réception, afin de pouvoir soulever et/ou manipuler l'appareil-tendeur 2 selon la direction de levage D.

Comme décrit précédemment, le crochet 1 comprend des moyens de retenue prenant avantageusement la forme d'au moins un aimant 13 orienté vers le canal 111.

L'aimant 13 permet de retenir la tige 21 de l'appareil-tendeur 2 dans le canal 111 par attraction magnétique.

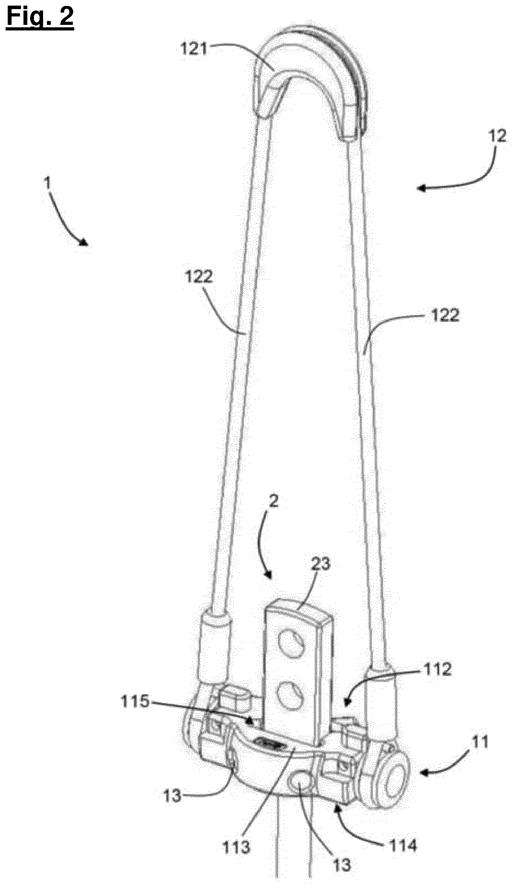

De préférence, et tel que cela est illustré sur la figure 2, le crochet 1 comprend deux aimants 13 orientés par le canal 111.

Les aimants 13 sont avantageusement placés chacun de part et d'autre du canal 111.

Plus particulièrement, les deux aimants 13 sont positionnés chacun d'un côté de la fente d'accès 112.

En référence à la figure 2, les moyens de préhension 12 sont reliés à la platine 11 par l'intermédiaire d'au moins une élingue 122.

Selon le mode de réalisation illustré sur les figures 1 à 11, les moyens de préhension 12 sont reliés à la platine 11 par l'intermédiaire de deux élingues 122. Chaque élingue 122 est montée en rotation sur la platine 11, de part et d'autre du canal 111. Cette rotation permet d'offrir un débattement de la platine 11 par rapport aux élingues 122 et ainsi d'en faciliter sa manipulation pour un technicien de maintenance.

Chaque élingue, à une extrémité opposée à celle par laquelle elle est reliée à la platine 11, est raccordée à un cavalier 121 par lequel le crochet 1 est manipulé via des moyens de levage 3.

En référence à la figure 11, le dispositif de levage 4 comprend des moyens de levage 3 et un crochet 1 tel que précédemment décrit.

Tel que cela est illustré sur la figure 11, le dispositif de levage 4 comprend également un palan 41 intercalé entre les moyens de préhension 12 du crochet 1 et les moyens de levage 3.

Plus précisément, le palan 41 comprend un doigt recourbé qui vient coopérer avec le cavalier 121 pour permettre la manipulation du crochet 1.

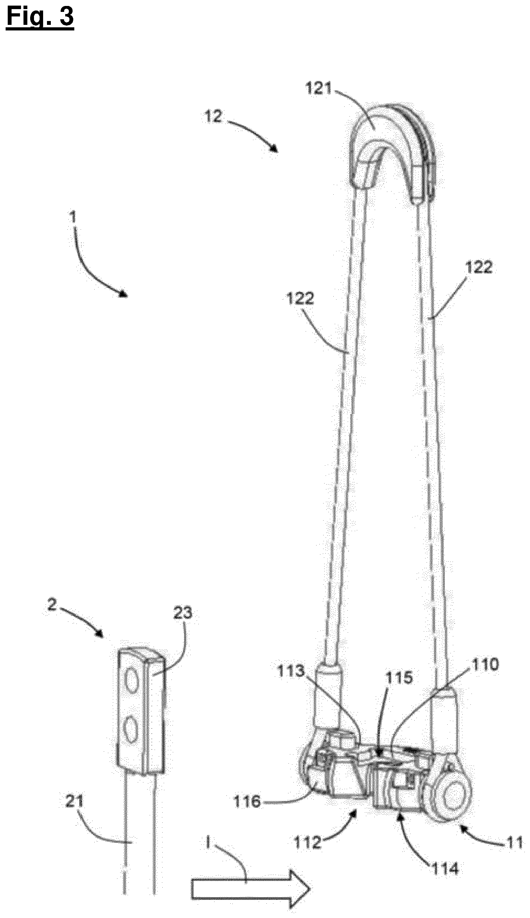

L'utilisation du crochet 1 pour le levage d'un appareil-tendeur 2 est à présent décrit en référence aux figures 3 à 11.

Selon une première étape illustrée à la figure 3, le crochet 1 de levage est déplacé pour permettre l'insertion de la tige 21 de l'appareil-tendeur 2 dans le canal 111 de la platine 11 selon une direction d'insertion I.

En référence à la figure 4, pour permettre l'insertion de la tige 21 dans le canal 111 de la platine 11, la platine 11 est pivotée selon un premier mouvement de rotation R1, de la valeur de l'angle a, ou quasiment. Cela a pour but que la fente d'accès 112 soit sensiblement parallèle à la direction de levage D, c'est-à-dire à la direction d'extension de la tige 21.

En référence à la figure 5, le crochet 1 de levage est déplacé de sorte que la tige 21 de l'appareil-tendeur 2 soit positionnée dans le canal 111. L'insertion de la tige 21 dans le canal 111 de la platine 11 est assurée selon la direction d'insertion I sur la figure 6.

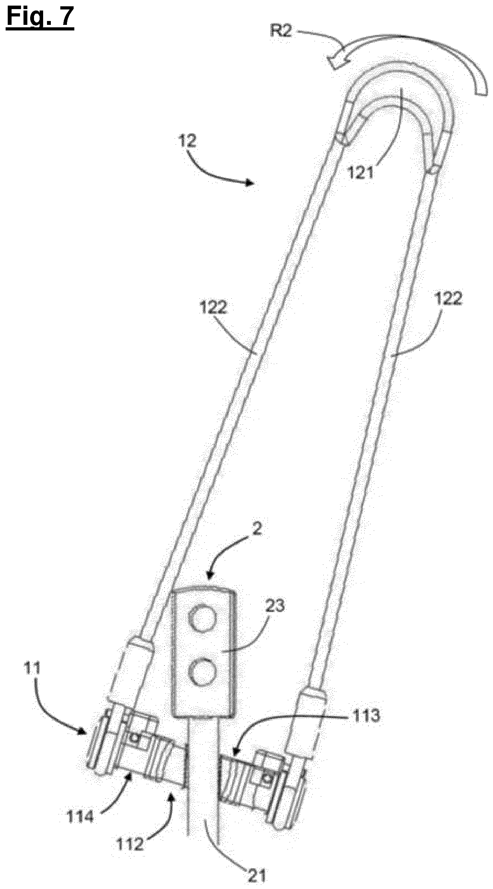

En référence à la figure 7, la tige 21 est positionnée dans le canal 111 de la platine 11.

La platine 11, qui est toujours dans sa position inclinée, doit alors être pivotée en sens inverse de sorte que fente d'accès 112 reforme avec la direction de levage D l'angle a.

Pour cela, la platine 11 est alors pivotée selon un deuxième mouvement de rotation R2 de sorte à annuler l'angle a, ou quasiment.

Lorsque l'ange α est annulé, la surface inférieure 231 de la pièce de raccordement 23 est alors parallèle au siège 110 de la platine 11, ou quasiment. Lorsque la tige 21 est positionnée dans le canal 111, elle est maintenue à l'intérieur de celui-ci par les aimants 13, et plus précisément par coopération magnétique avec les aimants 13.

Cela permet de garantir le bon positionnement de la pièce de raccordement 23 dans l'épaulement 115 lors du déplacement de la platine le long de la tige 21, jusqu'à ce que la surface inférieure 231 de la pièce de raccordement 23 soit au contact du siège 110 de la platine 11.

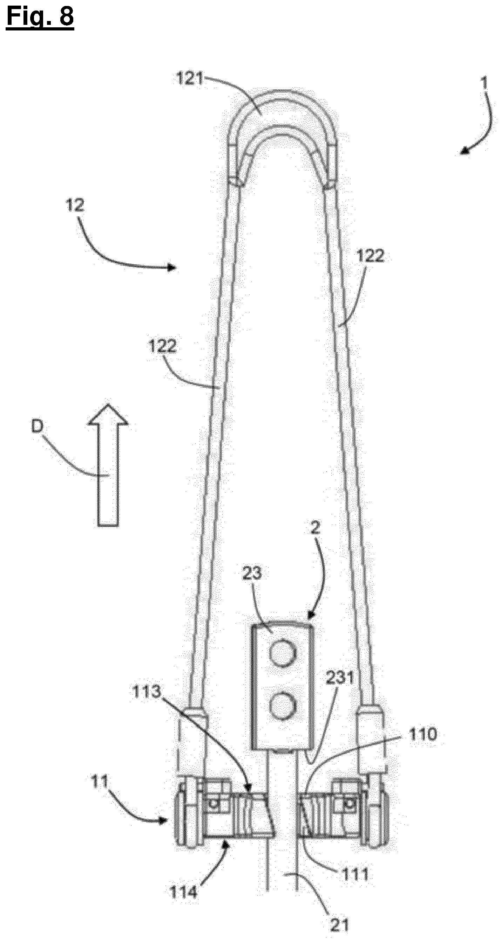

En référence aux figures 8 et 9, la platine 11, via les moyens de levage 3, peut alors être déplacée selon la direction de levage D pour permettre de soulever l'appareil-tendeur 2.

En référence à la figure 9, la pièce de raccordement 23 est représenté de biais dans l'épaulement 115.

Cela est notamment possible par le fait que les dimensions radiales de l'épaulement 115 sont supérieures aux dimensions radiales de la pièce de raccordement 23.

Cela permet au technicien de maintenance de ne pas se soucier de l'orientation de la platine 11 lors de l'opération de levage de l'appareil-tendeur 2.

En référence à la figure 11, les moyens de levage 3 et/ou le palan 41 peuvent alors être actionnés manuellement ou mécaniquement par le technicien de maintenance de sorte à lever l'appareil-tendeur 2 selon la direction de déplacement D.

Le crochet 1 de levage qui vient d'être décrit permet d'être manipulé par un seul technicien de maintenance, ce qui simplifie les opérations de maintenance des voies ferrées.

Par ailleurs, la sécurité du technicien de maintenance est accrue par rapport aux techniques de l'art antérieur puisque seul un mouvement de rotation intentionnel pour incliner la platine 11 peut permettre de faire ressortir la pièce de raccordement 23 du canal 111.

De plus, les aimants 13 permettent de retenir la tige 21 de l'appareil-tendeur 2 dans le canal 111 de la platine 11 du crochet 1 de levage lorsque les moyens de raccordement 23 ne sont pas en prise avec le crochet 1 de levage.

Dès lors, le technicien peut manipuler et déplacer le crochet 1 de levage sans risque de détachement ou d'écartement de l'appareil-tendeur 2 qui pourrait alors le blesser.

En outre, les aimants 13 permettent d'éviter tout glissement de l'appareil-tendeur par rapport à la platine 11, qui pourrait alors se désolidariser de l'appareil-tendeur 2 et provoquer un risque de blessure pour le technicien de maintenance.

De même, l'inclinaison de la fente d'accès 112 par rapport à la direction de levage D ou la direction d'extension du canal 111, permet de maintenir l'appareil-tendeur 2 captif du crochet 1 de levage lorsque l'appareil-tendeur 2 est soulevé. Ainsi, les risques de décrochement de l'appareil-tendeur, et donc de blessures du technicien de maintenance sont limitées voire supprimées.

Selon une variante de réalisation non illustrée, la surface inférieure 231 de la pièce de raccordement 23 est sphérique (ou bombée), le siège 110 de la platine 11 présentant alors une forme sphérique également (ou creuse).

## Revendications

1. Crochet (1) de levage pour le levage d'un appareil-tendeur (2) de caténaire (C), l'appareil-tendeur (2) comprenant :
- une tige (21) sur laquelle sont montés des poids (22),
- une pièce de raccordement (23) à la caténaire (C), montée à une extrémité de la tige (21) et s'étendant en saillie radiale de la tige (21), le crochet (1) de levage comprenant :
- une platine (11) ;
- des moyens de préhension (12) solidaires de la platine (11) et permettant la manipulation du crochet (1) de levage par des moyens de levage (3) ;
la platine (11) présentant :
- un siège (110) de réception de la pièce de raccordement (23) de l'appareil-tendeur (2) ;
- un canal (111) traversant de part en part la platine (11) selon une direction de levage (D), depuis le siège (110) de réception, et destinée à loger la tige (21) de l'appareil-tendeur (2), et
- une fente d'accès (112) au canal (111) pour amener la tige (21) dans le canal (111) depuis l'extérieur de la platine (11),
**caractérisé en ce que** la fente d'accès (112) s'étend obliquement par rapport à la direction de levage (D) dans un plan transversal (P) à une direction d'insertion (I) de la tige (21) dans le canal (111).

2. Crochet (1) selon la revendication 1, **caractérisé en ce qu'**il comprend au moins un aimant (13) orienté vers le canal (111) pour retenir la tige (21) de l'appareil-tendeur (2) dans le canal (111) par attraction magnétique.

3. Crochet (1) selon la revendication précédente, **caractérisé en ce qu'**il comprend deux aimants (13) orientés vers le canal (111), placés de part et d'autre du canal (111).

4. Crochet (1) selon l'une quelconque des revendications précédentes, **caractérisé en ce que** la platine (11) présente une face supérieure (113), le siège (110) de réception formant un épaulement (115) avec la face supérieure (113).

5. Crochet (1) selon la revendication précédente, **caractérisé en ce que** l'épaulement (115) présente des dimensions radiales supérieures aux dimensions radiales de la pièce de raccordement (23) pour permettre une rotation de la pièce de raccordement (23) dans l'épaulement (115).

6. Crochet (1) selon l'une quelconque des revendications précédentes, **caractérisé en ce que** la fente d'accès (112) est pratiquée sur une face avant (116) de la platine (11), la face avant (116) présentant une forme d'entonnoir pour permettre le guidage de la tige (21) de l'appareil-tendeur (2) dans la fente d'accès (112).

7. Crochet (1) selon l'une quelconque des revendications précédentes, **caractérisé en ce que** les moyens de préhension (12) sont reliés à la platine (11) par l'intermédiaire d'au moins une élingue (122).

8. Crochet (1) selon la revendication précédente, **caractérisé en ce que** la ou chaque élingue (122) est montée à rotation sur la platine (11).

9. Dispositif de levage (4) d'un appareil-tendeur (2) de caténaire (C), comprenant :
- des moyens de levage (3) ;
- un crochet (1) selon l'une quelconque des revendications précédentes.

10. Dispositif de levage (4) selon la revendication précédente, **caractérisé en ce qu'**il comprend également un palan (41) intercalé entre des moyens de préhension (12) du crochet (1), et un les moyens de levage (3).

## Patentansprüche

1. Hubhaken (1) zum Heben einer Spanneinrichtung (2) einer Oberleitung (C), wobei die Spanneinrichtung (2) umfasst:
- eine Stange (21), an der Gewichte (22) montiert sind;
- ein Anschlussstück (23) an die Oberleitung (C), das an einem Ende der Stange (21) montiert ist, und das sich radial aus der Stange (21) überstehend erstreckt, wobei der Hubhaken (1) umfasst:
- eine Platine (11);
- Greifmittel (12), die fest mit der Platine (11) verbunden sind, und die Handhabung des Hubhakens (1) durch Hubmittel (3) erlaubt;
wobei die Platine (11) Folgendes aufweist:
- einen Sitz (110) zur Aufnahme des Anschlussstücks (23) der Spanneinrichtung (2);
- einen Kanal (111), der die Platine (11) von einer Seite zur anderen in einer Hubrichtung (D) aus dem Sitz (110) zur Aufnahme heraus durchquert, und dazu bestimmt ist, die Stange (21) der Spanneinrichtung (2) unterzubringen, und
- einen Zugangsschlitz (112) zum Kanal (111) zum Zuführen der Stange (21) in den Kanal (111) von außerhalb der Platine (11), **dadurch gekennzeichnet, dass**
sich der Zugangsschlitz (112) schräg in Bezug auf die Hubrichtung (D) in einer Querebene (P) zu einer Einführungsrichtung (I) der Stange (21) in den Kanal (111) erstreckt.

2. Haken (1) nach Anspruch 1, **dadurch gekennzeichnet, dass** er mindestens einen zum Kanal (111) ausgerichteten Magneten (13) umfasst, um die Stange (21) der Spanneinrichtung (2) durch Magnetanzugskraft in dem Kanal (111) zurückzuhalten.

3. Haken (1) nach dem vorstehenden Anspruch, **dadurch gekennzeichnet, dass** er zwei zum Kanal (111) ausgerichtete Magneten (13) umfasst, die beiderseits des Kanals (111) platziert sind.

4. Haken (1) nach einem der vorstehenden Ansprüche, **dadurch gekennzeichnet, dass** die Platine (11) eine Oberseite (113) aufweist, wobei der Sitz (110) zur Aufnahme einen Ansatz (115) mit der Oberseite (113) bildet.

5. Haken (1) nach dem vorstehenden Anspruch, **dadurch gekennzeichnet, dass** der Ansatz (115) radiale Abmessungen aufweist, die größer als die radialen Abmessungen des Anschlussstücks (23) sind, um eine Drehung des Anschlussstücks (23) in dem Ansatz (115) zu erlauben.

6. Haken (1) nach einem der vorstehenden Ansprüche, **dadurch gekennzeichnet, dass** der Zugangsschlitz (112) auf einer Vorderseite (116) der Platine (11) eingearbeitet ist, wobei die Vorderseite (116) eine Trichterform aufweist, um die Führung der Stange (21) der Spanneinrichtung (2) in den Zugangsschlitz (112) zu erlauben.

7. Haken (1) nach einem der vorstehenden Ansprüche, **dadurch gekennzeichnet, dass** die Greifmittel (12) anhand mindestens eines Hebegurts (122) mit der Platine (11) verbunden sind.

8. Haken (1) nach dem vorstehenden Anspruch, **dadurch gekennzeichnet, dass** der oder jeder Hebegurt (122) drehend an der Platine (11) montiert ist.

9. Hubvorrichtung (4) einer Spanneinrichtung (2) einer Oberleitung (C), umfassend:
- Hubmittel (3);
- einen Haken (1) nach einem der vorstehenden Ansprüche.

10. Hubvorrichtung (4) nach dem vorstehenden Anspruch, **dadurch gekennzeichnet, dass** sie auch einen Flaschenzug (41), der zwischen den Greifmitteln (12) des Hakens (1) eingesetzt ist, und ein die Hubmittel (3) umfasst.

## Claims

1. A lifting hook (1) for lifting a tensioning apparatus (2) of a catenary (C), the tensioning apparatus (2) comprising:
- a rod (21) on which weights (22) are mounted,
- a connecting part (23) for connecting to the catenary (C), mounted at one end of the rod (21) and extending radially protruding from the rod (21),
the lifting hook (1) comprising:
- a plate (11);
- gripping means (12) which are secured to the plate (11) and allowing the handling of the lifting hook (1) by lifting means (3);
the plate (11) having:
- a seat (110) for receiving the connecting part (23) of the tensioning apparatus (2);
- a channel (111) passing right through the plate (11) in a lifting direction (D), from the receiving seat (110), and intended to house the rod (21) of the tensioning apparatus (2), and
- a slot (112) for accessing the channel (111) to bring the rod (21) into the channel (111) from the outside of the plate (11),
**characterised in that**
the access slot (112) extends obliquely relative to the lifting direction (D) in a plane (P) transverse to a direction (I) of insertion of the rod (21) into the channel (111) .

2. The hook (1) according to claim 1, **characterised in that** it comprises at least one magnet (13) oriented towards the channel (111) to retain the rod (21) of the tensioning apparatus (2) in the channel (111) by magnetic attraction.

3. The hook (1) according to the preceding claim, **characterised in that** it comprises two magnets (13) oriented towards the channel (111), placed on either side of the channel (111).

4. The hook (1) according to any one of the preceding claims, **characterised in that** the plate (11) has an upper face (113), the receiving seat (110) forming a shoulder (115) with the upper face (113).

5. The hook (1) according to the preceding claim, **characterised in that** the shoulder (115) has radial dimensions which are greater than the radial dimensions of the connecting part (23) to allow rotation of the connecting part (23) in the shoulder (115).

6. The hook (1) according to any one of the preceding claims, **characterised in that** the access slot (112) is provided on a front face (116) of the plate (11), the front face (116) having a funnel shape to allow guiding the rod (21) of the tensioning apparatus (2) into the access slot (112) .

7. The hook (1) according to any one of the preceding claims, **characterised in that** the gripping means (12) are connected to the plate (11) via at least one sling (122).

8. The hook (1) according to the preceding claim, **characterised in that** the or each sling (122) is rotatably mounted on the plate (11).

9. A lifting device (4) of a tensioning apparatus (2) of a catenary (C), comprising:
- lifting means (3);
- a hook (1) according to any one of the preceding claims.

10. The lifting device (4) according to the preceding claim, **characterised in that** it also comprises a hoist (41) interposed between means (12) for gripping the hook (1) and the lifting means (3).
